# EUROPEAN PATENT APPLICATION

(11) **EP 0 538 055 A1**
(43) Date of publication of application: **21.04.1993**
(21) Application number: 92309471.8
(22) Date of filing: 16.10.1992
(51) Int. Cl.: F16K 31/26

(54) **Level control valve arrangement and water closet cistern**

(30) Priority: 16.10.1991 EP 91309542
(71) Applicant: DALLAH WATER SAVING, El Mohandesseen, Giza (EG)
(72) Inventor: Younes, Abd el Rasoul Mohamed, El Mohndesseen, Giza (EG)
(74) Representative: Baillie, Iain Cameron

(57) **Abstract**

There is disclosed a level control valve arrangement preferably for use in a water closet cistern for controlling the liquid level in the cistern or container. The arrangement has a liquid inlet (3) feeding an inlet chamber (1) and a movable valve member (7,10) mounted on a seating (11,12) and movable between an open position in which liquid flows from the inlet into the cistern and a closed position in which liquid is prevented from flowing into the cistern. The movable valve member is biased preferably by a float arm into the closed position in response to liquid in the cistern rising to a predetermined level. The movable valve member (7,10) is mounted in the inlet chamber into which water is fed from the inlet (3) and in the closed position the valve is acted upon by a head of water in the inlet chamber to maintain the movable valve member in the closed position.

The control system is distinguished by the use of water head pressure upon an upper conical surface of the movable valve member during closure thereof thereby increasing the compactness area upon its base. When releasing the movable valve member the conical form of the valve member exceeds the water pressure on the movable member during closure and slackens the pressure on it during opening.

Advantageously, such an arrangement ensures there is no leakage of water into the cistern, the inlet valve is not affected by changes in water pressure of the inlet supply, and the contact area of the valve is substantially increased providing a considerably reduction of wear of the valve, particularly the rubber washer between the movable valve member and seating of the inlet chamber.

Conveniently, the speed of water exiting from the expulsion valve opening is increased to more quickly and easily clean a lavatory for example.

## Description

The present invention relates to level control valve arrangement and also to a water closet cistern, which may optionally include the level control valve arrangement. The application of the level control valve arrangement is not however restricted to water closet cisterns.

Conventional water cisterns such as the siphon type are known to utilise float control valves for controlling the flow of water into a water closet cistern. The control valve is often a restriction in the water feed pipe which is closable by a movable piston and rubber seal which together are movable back and forth to engage or disengage the valve seat and control the flow of water.

Such valves have the disadvantages of wearing out quickly because of water sealing and wear on the rubber seal because the area of control between piston seal and valve seat is small. Moreover, the closing of the valve relies on two opposed forces, namely the pressure of the water feed and the pressure applied to the piston by the float control. Disadvantageously such valve is subject to dripping or leakage as a result of undue changes in water pressure in the feed pipe.

Moreover, in such systems as used in cleaning a water closet through the traditional type cisterns, according to the international standards specification the amount of water used is nine litres of water within a period of six seconds so as to clear the water closet. This is an essential requirement of traditional siphon systems.

Furthermore, water lost as a result of seepage from control valves is valued at the rate of 10% of potable water stations production from all the world states (according to the standard international specifications to the design of potable water stations).

In addition 13.5% of the total of human consumption (per individual) is used in discharging human remains from the water closet lavatory.

This is calculated according to the human consumption range of potable water daily which is approximately 200 litres. The average use in operating the cistern of a water closet daily is considered to be three times. In this way the aforementioned percentage is calculated to be : 3 x 9/200 = 13.5%. This is according to the standard international specification.

This warns of the danger in making the potable water go to waste and the importance of controlling its consumption in the dry era that dominates the world and the huge financial costs for potable water production for sanitary drainage water treatment, and environmental pollution resulting from the sanitary drainage water.

Therefore, there is a pressing need to provide a new valve to control the water percolation from a feed to the water cisterns.

Moreover, this generated a further need to provide a new system to control the traditional systems, that is, to improve water flow for the purpose of making available a lesser quantity of water for use in cleaning the water closet by the same functional performance efficiency as required by the international standard specification. In addition the chance of water seepage from the water percolation valve for cleaning the water closet during the mentioned valve closure is prevented (this is irrespective of the use, amendment or changing the known industrial compositions used in the mentioned water percolation valves or that use at present.

It is desirable to provide a level control valve arrangement in which the above mentioned disadvantages are substantially overcome.

According to one aspect of the invention there is provided a level control valve arrangement for controlling the liquid level in a container, the arrangement comprising a liquid inlet and a movable valve member mounted on a seating and movable between an open position in which liquid can flow from the liquid inlet through an outlet into the container and a closed position in which liquid is prevented from flowing through the outlet into the container, the movable valve member being provided with biasing means which biases the valve member into the closed position in response to liquid in the container rising to a predetermined level, said movable valve member being mounted in an inlet chamber which is in communication with said liquid inlet and in the closed position is acted upon by a head of liquid in the inlet chamber which acts to maintain the movable valve member in the closed position, characterised in that said movable valve member includes a sealing portion which has a sealing surface which in the open position of the valve member is exposed to liquid in the inlet chamber and in the closed position of the valve member seals against a further sealing surface disposed about the periphery of the said aperture, and a conical surface on the side of the movable valve member remote from the sealing surface thereof upon which a head of liquid in the inlet chamber is arranged to act to force the sealing surface upon the further sealing surface, and that the further sealing surface is provided by a layer of resilient material located between the outlet and the sealing surface of the movable valve member.

The above arrangement has the advantage that the wear of the valve member and its seating is reduced in particular because the head of water in the inlet chamber tends the valve closed irrespective of minor fluctuations in the liquid level in the container. Accordingly, the problem of intermittent opening and closing of the valve member and the associated intermittent tinkle of liquid into the container is alleviated.

According to another aspect the invention there is provided a water closet system comprising a normally open valve arrangement which is arranged to close a discharge outlet of the cistern when the system has partially discharged. The water closet system may optionally incorporate a level control valve arrangement in accordance with the first aspect of the invention for controlling the water level in the cistern.

The above water closet system has the advantage that the amount of water required for each flush is reduced, without compromising the force of flushing.

Preferred features of the invention are defined in the dependent claims.

A preferred embodiment of the invention is described below by way of example only with reference to the accompanying drawing in which:
Figure 1 is a diagrammatic cross-sectionsl elevation of a water closet cistern in accordance with the invention, and
Figures 2a and 2b are diagrammatic cross-sectional elevational views of a water closet system and level valve respectively.

The drawing shows an inlet chamber 1 mounted within a cistern 1a and provided with water inlets 3 or 4 and a vertically movable valve member comprising a frusto-conical sealing portion 7 and a tubular guide member 10 carried by sealing portion 7 and located for movement in an aperture 16 of a base wall 11 of the inlet chamber. The inlet chamber 1 includes a tight fitting removable cover 2.

A lower surface 9 of the sealing portion 7 is arranged to engage a rubber washer 12 which is vertically movable (with lost motion relative to the valve member) within a lower guide portion 15 of the inlet chamber. The washer 12 has an external diameter substantially identical to the internal diameter of the portion 15 whilst its internal dimensions are substantially identical to the external dimensions of the tubular guide member 10. In the open position of the valve member as shown, water can flow as indicated by the arrows into inlet chamber 1 and thence via elongate openings (not shown) extending longitudinally along the wall of tubular guide member 10 through bore 6 of tubular guide member 10 into the cistern.

The tubular guide member 10 may conveniently have an oval cross-section and be divided along its entire length into two spaced apart portions defining the elongate apertures therebetween. The spacings between the two portions are diametrically oppositely disposed along the minor axis of the oval cross-section.

The valve member is pulled down against washer 12 and base 11 to close the valve by the action of a lever 17 located in the cistern, when the water level in the cistern reaches a predetermined level. The lever 17 carries a float 18 at one end remote form the inlet chamber and is coupled to the lower end of the tubular guide 10 by a pivotal connection 14 at its opposite end. The lever float assembly is pivotally supported intermediate its ends by an intermediate pivot 13 fixedly mounted on the inlet chamber 1.

In the closed position of the valve member, water from of water acts on the upper front conical surface of portion 7 of the valve member and keeps the valve closed irrespective of minor fluctuations in the water level in the cistern 19. In view of this feature and also the relatively large area of sealing surface 9, wear of the valve is substantially reduced.

The cistern also incorporates a discharge or overflow outlet 21 for excess water and this may comprise a conventional system (not shown). The overflow outlet 21 includes a valve 22 which is closed when a further float member comprising an annular float 23 disposed about the vertically aligned overflow outlet falls with the water level in the cistern to a predetermined level. The float 23 carries a rubber bushing 24 which in turn carries a ring 25 at its lower end. Ring 25 is arranged to engage a control member (not shown) of valve 22 only to close this valve. Accordingly, the cistern terminates each flush when the water level falls to the predetermined level. However, the form of flushing is not affected.

The operation of the cistern will now be described assuming the water level in the cistern is at its maximum level with valve 7, 10 shut and held in that position by the pressure or head of water in inlet chamber 1 acting upon the straight frusto-conical external surface of sealing portion 7.

An operating mechanism, preferably a lever (not shown) is used to open the valve 22 allowing the water in the cistern to flow therethrough into a toilet basin (not shown). As the water level in the cistern falls to a predetermined level the float 23 falls also and the ring 25 on bushing 24 acts upon valve 22 via a lever 26 to close the valve 23 which then remains closed even through the float 23 moves upwardly disengaging ring 25 from lever 26 following the ingress of fresh water through valve member 7, 10.

Simultaneously with the drop in water level in the cistern float 19 moves downwardly causing arm 17 to pivot about intermediate pivot 13 to move guide member 10 upwardly and subsequently disengages sealing portion 7 from washer 12 and base 11, against the head of water in the inlet chamber 1. The water in the inlet chamber 1 and inlet 3 the flows through aperture 16 into the cistern.

When the water in the cistern reaches its appropriate level the arm 17 pivots to close valve 7, 10 completely sealing off the cistern from the water supply. The inlet chamber 1 then fills with water and the head of water acting upon the external frusto-conical surface 8 of sealing portion 7 ensures the undersurface 9 of sealing portion 7 remains firmly and sealingly in contact with washer 12 and base 11 with no leakage of water through aperture 16.

Therefore, there has been described a water closet cistern including a level control valve arrangement in which, advantageously, the area of the sealing portion of the valve in contact with the valve seat is much larger than hitherto known, relies on water pressure on an enlarged surface area of the sealing portion to keep the sealing portion in tight control with the base thereby preventing leakage of water through aperture 16 via the elongate opening in the movable guide member. The diameter and active area of a rubber sealing washer is also greatly increased over such previously known washers. Moreover, the size of the aperture 16 and elongate openings in the guide member are less subject to blockage by scaling of water over long periods of time.

The level valve arrangement according to the present invention allows for the passage of a flushing water force relative to the overall total size of the siphon cistern for example for the purpose of removing the remnants present in the water closet, according to the standard international specifications. It controls and keeps inside the cistern a quantity of water which is more than that needed for cleaning. This is achieved by closing the water outlet valve as described above by using the float or alternatively using an interconnected or separate arm coupled with the main float arm for outlet chamber 1 or by any other means that work autonomously or by itself or mechanically or manually by suction or pressure or lifting or circulation.

Conveniently the sealing portion 7 and guide member 10 are a one piece integral moulding. Moreover, provided the base 11 is flat the washer 12 can be omitted and the undersurface 9 of the sealing portion 7 can sealingly engage base 11 without leakage through aperture 16.

The valve member or more particularly, the sealing portion 7 between inlet chamber 1 and the cistern is described as being frusto-conical. However, the sealing portion may take any shape or form provided it has a surface area which is (a) sufficiently large to sealingly engage the base or rubber washer between it and the base, and (b) sufficiently large in surface area so that the head of water in the inlet chamber exerts sufficient pressure thereon to tightly hold the sealing portion against the base.

The outlet valve of the cistern is described as being closable by a float as the water level in the cistern falls to a predetermined minimum, however, the outlet valve may be operated by a lever connected to the float lever 17 rather than the independently operable float 23, or by any other mechanical electrical or hydraulic operable device.

In an alternative level control valve system according to the present invention the system conveniently includes a water input feed and a movable valve member located on a base and movable between an open position by a buoy or ball having a density and limited weight to float upon water percolating from the water input to the cistern through a longitudinal opening that extends on the tubular member wall. A closed position of the movable valve member is achieved when the buoy or ball is moved upwardly in the cistern by the increase in the level of water within the system to a predetermined level. The movable valve member is engageable with its base inside the input chamber through the pressure of the water head upon the buoy or ball of the control arm and on a conical surface of the movable valve member and avoids water seepage through the movable valve member and seat base irrespective of changes in water level in the cistern or the input chamber. Between the movable valve member and its base is a malleable layer to prevent water seepage. The external circumference of the malleable layer is similar in form to the external circumference of the input chamber and the external circumference to the base. Moreover, this is interrupted by the malleable barrier which has an opening that is similar with an opening in the base of the input chamber.

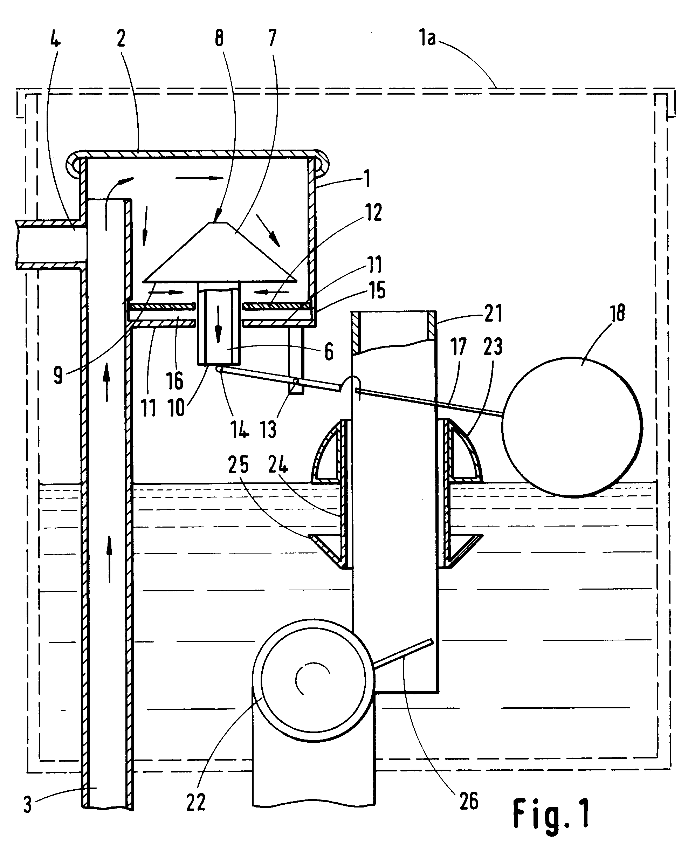

In addition this system is distinguished by a base, an element of the movable valve and the control arm by rotating the input chamber 360° to be fixed in any direction according to demand. The water percolation valve operates with either a horizontal or vertical feed extension by locating a stopper in place of any two extensions at the mentioned input chamber and is indicated in Figure 1.

The movable valve member is distinguished in that it is located in an input chamber connected to the mentioned water input and comprises a tabular valve member extending from a disc like surface and having an upper surface is distinguished by a conical form. The disc like surface is the largest downwardly facing surface and is a planar surface. An axle is located at a lower extremity of the valve member for connecting the tabular member to one end of a control arm having a buoy or ball at its opposite end.

The movable valve member is distinguished by the water percolation opening, that is, in a tubular member extending from the movable valve head. Moreover, the valve is particularly distinguished by the enlarged diametrical valve seat engageable with a malleable disc of substantially the same diametric with as the valve seat and which is located between the valve seat and a fixed valve base of the input chamber having a water outlet aperture therein through which the tabular member extends.

In spite of the compactness of the new water control valve, the valve is also distinguished by the efficiency of operation, performance and by its flexibility of use on all kinds of water cisterns.

Conveniently, the use of water head pressure on the other conical surface of the movable valve member during its closure leads to the effective expansion of the area of the sealing member of its compactness on the base.

The pressure applied by the water upon the conical surface of the movable valve member is greater than the water pressure on the movable member during its closure and the shape of the conical surface has the effect of releasing pressure on it during opening of movable member.

The interconnection of the movable valve member, control arm carrying at one end the float or buoy, and the dimensions of the input chamber work together for operating the valve autonomously with the fall and rise in the water level within the water closet system.

Advantageously, these features prevent the chance of water seepage from between the movable member and its base. Moreover, long use of the movable valve member, its base, and malleable layer compactness adds to the expansion of the seat tangent area as described below.

The use of different diameters of an expulsion valve of the cistern opening is distinguished by a quicker water force speed through the expulsion valve opening to clean a water closet lavatory for example.

Accordingly, the expulsion valve according to the present invention is distinguished by the quick water percolation to clean the water closet and outlet opening in a conical form in the base of the cistern tapering inwardly in the direction of water flow from the expulsion box during the opening of the valve for the purpose of cleaning the water closet lavatory.

The fast flow outlet of the lavatory cleaning water is further distinguished by the fact that the outlet opening has a gate on one wall suspended on an axle which allows the passage of a fixed percentage of atmospheric air to facilitate speed of water through the conical outlet during the expulsion valve opening.

Conveniently, the fast flow of the water from the expulsion valve opening leads to the force of water in the lavatory for removing the remains and cleaning of the lavatory. Therefore, a high efficiency is obtained for the performance which uses 50% of the water to achieve the same results as the convention systems.

The use of the overall pressure of the water used in the known system with the emission of a predetermined quantity of water for the purpose of cleaning is improved by control in closing the expulsion valve gate by any manual or independent means. This is achieved in the present invention by the expulsion valve being closed by an additional float or buoy. The float or buoy comprises a tubular extension having at its upper extremity a ring or variable member of rings mounted on the extension. This has the purpose of fixing the quantity of the water demanded to be supplied in advance. The lower extremity of its extension bears a preferably inverted conical float ring for the purpose of closing the mentioned expulsion gate valve.

The additional floating buoy is distinguished by having a density, weight and fixed specifications and is of a hollow cylindrical form and it includes inside it an incompact form, an additional water overflow pipe (earlier indicated at 21 in Figure 1). The movement of the additional buoy is distinguished with its facility of moving upwardly with the water height and downward with the water fall in the mentioned expulsion box.

The control system is distinguished in closing the expulsion gate valve closure by other different means as the weight of the mentioned expulsion valve gate or attaching the movement of the mentioned expulsion valve gate to the movement of the control arm buoy work or the control arm work movement or the movement of the operating knob handle work or the operating knob work movement.

Advantageously, the control in closing the expulsion valve realises a 50% saving of the traditional expulsion box water within a period of 3 seconds and the same functional performance efficiency is achieved. More particularly, this results in a saving of 7% of the international production of the potable water used at present with no reduction in cleaning effect. The chance of water seepage from between the expulsion valve gate and its base is eliminated by that continual pressure of water present in the cisterne box continually on the expulsion valve gate cover when it is lead by the mentioned buoy or by any other means.

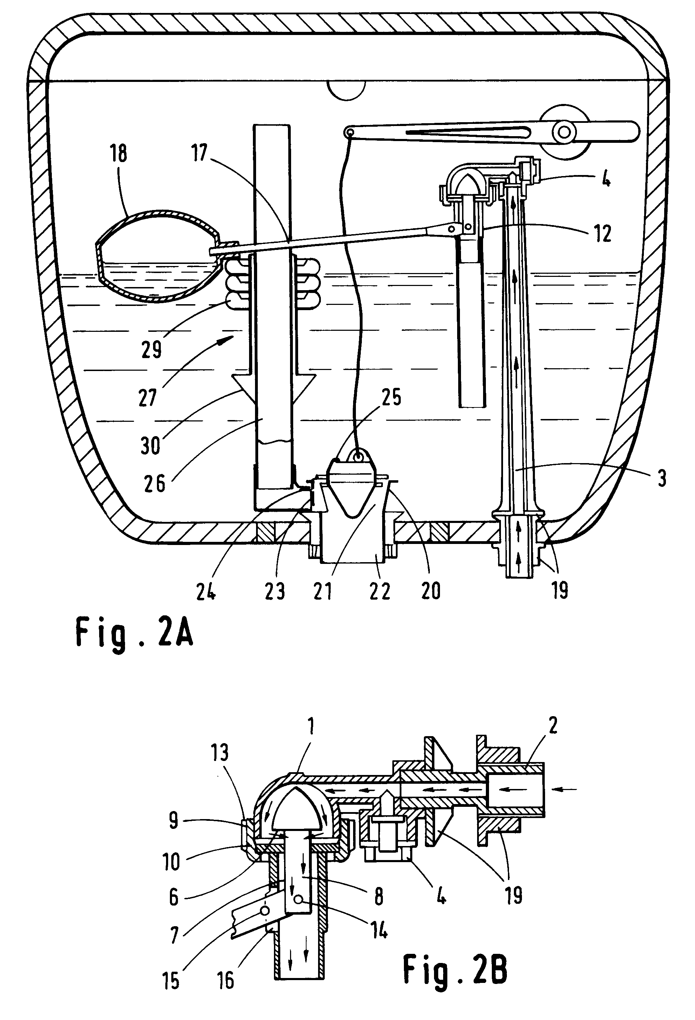

An alternative embodiment will now be described in more detail with reference to Figures 2a and 2b. Figure 2a discloses an input chamber 1 shown in more detail in 2b, and fixed by support connectors 19 to a system 1-A and is connectable to a water inlet 2 and 3 and a stopper 4 to close one of the mentioned water inlets. A movable valve member extending vertically in the drawing has a compacting upper surface in a conical form with a lower planar surface 6 and a tabular member 7 extending from the planar surface in a longitudinal axial direction. The tabular member 7 is located for movement in a water outlet opening, that is, inside the input chamber which is in two parts interconnected by an assembling screw thread 13.

A sealing disc like member 9 is located between the movable valve member and base 10. Sealing surface of member 9 of malleable material prevents water seepage and the outer circumference thereof is similar to the external circumference of the input chamber 1 and the external circumference to the base 10. In addition there is in between the member 9 an opening that is similar with the opening 11 in base 10.

When the water level falls in the container the movable valve member autonomously opens by the floating buoy or ball 18 on control arm 17 having a high density and fixed weight mounted at the centre of gravity by a pivotal axis 15. Inside part 16 that extends outwardly from cylindrical extension 12 of the input chamber the end of the tabular member 7 remote from the valve head 5 is connected by axle 14 to control arm 17. In an open position water gushes in the direction shown by the arrows to the inside of the input chamber 1 and consequently through opening 8 that is in the tabular member 7 and extends in a longitudinal direction from below the centre of the planar surface 9 to the axle 14 and when the water gushes from the tabular member opening it is contained by the hollow cylindrical extension 12 until it exits from the outlet thereof.

The movable valve member completely closed by the control arm 17. This occurs when the water in the cistern reaches a pre-determined level when the movable disc like surface 6 sits on member 9 on its base 10 and according to what is indicated by arrows the water gushes from the feed extension 2 or 3 to the inside of the input chamber 1. The water presses on the conical surface 5 and controls the valve closure irrespective of any variations in the water level in the container or the input chamber 1.

Figures 2a and 2b illustrate the traditional type operation of the explusion valve 20 fixed appropriately by wire or string for example to the innermost end of the expulsion valve having a conical form. The valve has a base 21 which extends in the direction of the water flow to outlet end 22 which is connected with the water closet lavatory. The valve is provided with a cover 25 for preventing the water flow during its closure. The base 21 has available in its wall a water flow opening 23 to which is connected an overflow pipe 26 for removing any excess water in the cistern. The opening 23 is closed and opened by a gate 24 which is mounted on an axle at the highest point of the opening 23 to allow the passage of a fixed percentage of air through the water pipe base 26. The gate 24 opens in the direction of the water flow to the water closet lavatory to ensure removal of excess water from the cistern.

Figure 2a illustrates an additional floating buoy 27 mounted coaxially about the air inlet tube 26 to the valve 24 and having an extension 28 preferably on its upper end a ring or rings 29 and on its lower end a ring 30 for closing the expulsion valve opening and to prevent the water flow from the cistern to the water closet lavatory.

Therefore there has been described a new valve system which uses the water pressure of a water supply upon a conical surface of a movable valve member to control the water passing from the feed to a water system for example as a form of expulsion box. Traditionally closet siphon expulsion boxes have an independent operating system which includes a water inlet 2, 3 and a movable valve member 5, 7 which is movable between an open and closed position against a sealing member 9 which prevents water seepage and a base 10. When the water falls in the container the movable valve member is opened by a control arm 17 connected to the valve at one end and at its opposite end being connected to a float or buoy 18 of a density and weight arranged to float upon the water in the expulsion box or cistern through a longitudinal opening 8 in the wall of a tabular member 7. When the water rises in the cistern to a predetermined level the movable valve member sits on its base inside an input chamber 1 by the force of the control arm 17 and float 18, and the water head in the input chamber which acts upon the conical surface 5 of the movable valve member to firmly control the sitting or engagement of the movable valve member. Because of the extremely large contact area between the valve and the resilient sealing member water seepage is prevented. The external circumference of the sealing member 9 is substantially similar to the external circumference of the edge of the input chamber and the external circumference of the base 10. In addition, the central aperture through the seepage seal 9 is similar to the opening that is in base 10 for receiving the tubular member 7 therein which is connected with the control arm 17. Both rotate around the input chamber through 360° or less and are fixed in one direction, that is according to the demand and in the case of operating a horizontal input chamber 2 the stopper 4 is fixed in place of the head input 3 and vice versa. The movable valve member is preferably located in an input chamber connected to the water input 2 or 3. The movable valve member comprises a disc like contact surface 6 and an upper surface 5 which is of a conical format in an axial direction through the movable valve member. Extending from the disc like planar surface 6 is a tabular member 7 having a longitudinally extending opening 8 for the purpose of providing water flow from the input chamber to the cistern. Towards the end of the tabular member remote from the disc like surface 6 is mounted an axle to which is connected a control arm 17 which is pivotally mounted on a part 16 extending prominently from a hollow cylindrical extension coaxial with the tabular member 7. A float or buoy 18 is connected to the control arm 17 at its end remote from the tabular member 7.

Conveniently, the use of water head pressure upon the upper conical surface 5 to the movable valve member 7 during closure leads to a comparative increase to the area of tangent compacting the movable valve member as it sits on the sealing member 9 preventing seepage and its plain base or the conical one. Preferably the sealing member 9 is of a malleable material.

Advantageously, when releasing the movable valve member the upward pressure upon the water formed by the conical surface of the movable valve member exceeds the water pressure on the movable member and the reduced pressure assists opening of the valve. In addition, the form of the upper conical surface of the movable valve member, the control arm with its floatable buoy having a density and fixed weight, the gravity point of the control arm and the dimensions of the input chamber all work for independent operation of the movable valve member within the rise and fall of the water cistern.

In the control system shown in Figure 2a an outlet from the system is controlled by an expulsion valve having a conical format which engages base 21 of the opening inside the water cistern. The opening consists of a relatively short tubular member having an enlarged diameter portion at its end inside the cistern and a smaller diameter externally of the cistern. The tapering portion of the outlet tapers inwardly in the direction of movement of water from the cistern passing the outlet end 22 into a lavatory, for example, and is available to receive the opening stopper 25 for preventing the flow of water from the opening when closed. An overflow water-pipe and air feed pipe 26 is connected to one side of the expulsion valve outlet to provide an opening 23 independently closed and opened by a gate 24. The gate is mounted on an axle located in an upper wall of the water opening. The passage 26 allows a fixed percentage of air to pass during closure and opens in the direction of water flow to the lavatory for the purpose of water flow exceeding that which has normally been achieved with traditional systems of similar size.

The use of a variable diameter or tapering portion 20 in the outlet of the cistern has the effect of increasing the speed of water flow thus applying the water to a lavatory with greater force than otherwise.

The speed of flow through the outlet of the cistern is further enhanced by the flow of air through gate 24 at opening 23 of the outlet.

Conveniently, the expulsion valve is closable by a second float which is preferably located about the water overflow pipe 26 and comprises a tube to the upper end of which in Figure 2a is mounted a first float 29 comprising a plurality of independent rings which can be located at various locations along the length of the tube 28.

When the cistern is operated and the expulsion valve is opened water flows through the outlet 22 to clean the lavatory and the water level within the cistern falls. As the water falls the floats 18 and 29 also drop and when the water level is sufficiently low a further float 30 connected to the lowermost end of the tube 28 engages a point 25 on the expulsion valve and forces the expulsion valve against its seat 21 thereby closing off the outlet 22. As will be appreciated by controlling the citing of the float rings 29 on the tube 28 the minimum water level within the cistern can be controlled.

The system disclosed is distinguished in the use of the overall pressure of water used over the traditional water closet with the flow of a fixed quantity of water beforehand for cleaning the lavatory. This is achieved by controlling the closing of a traditional expulsion valve gate either manually or by other independent means using the weight of the expulsion valve gate or attaching the control arm to the expulsion valve gate or bonding the control arm movement to the expulsion valve gate movement, or binding the operating knob arm movement to the movement with the expulsion valve gate.

Advantageously, the system is distinguished over the traditional expulsion valve gate by the additional buoy or float or any manual or independent means which substantially removes the chance of delaying the expulsion valve gate preventing water seepage for the cause of delaying the closure of the expulsion valve gate.

Conveniently, the system is distinguished in providing more than a 50% saving in water consumed over that presently used in cleaning the water closet lavatory using a traditional cistern. Moreover, water seepage from between the expulsion valve gate and its base is prevented by the pressure of the quantity of water present in the cistern being continually applied to the expulsion valve gate when closed by the additional floating buoy or any other means.

Reference to liquid throughout this specification is to be taken as reference to fluids.

Whilst the invention has been described above with particular reference to a toilet cistern which is preferably of the siphon type, the invention is equally applicable to control in the manner described the storage and dispensing of any fluid matter preferably in liquid or gaseous form.

## Claims

1. A level control valve arrangement for controlling the liquid level in a container, the arrangement comprising a liquid inlet (3,4) and a movable valve member (7,10) mounted on a seating and movable between an open position in which liquid can flow from the liquid inlet (3,4) through an outlet into the container and a closed position in which liquid is prevented from flowing through the outlet into the container, the movable valve member being provided with biasing means (17,18) which biases the valve member into the closed position in response to liquid in the container rising to a predetermined level, said movable valve member (7,10) being mounted in an inlet chamber (1) which is in communication with said liquid inlet (3,4) and in the closed position is acted upon by a head of liquid in the inlet chamber which acts to maintain the movable valve member in the closed position, characterised in that said movable valve member (7,10) includes a sealing portion (7) which has a sealing surface (9) which in the open position of the valve member is exposed to liquid in the inlet chamber and in the closed position of the valve member seals against a further sealing surface disposed about the periphery of the said aperture, and a conical surface on the side of the sealing portion remote from the sealing surface upon and upon which a head of liquid in the inlet chamber is arranged to act to force the sealing surface upon the further sealing surface, and that the further sealing surface is provided by a layer of resilient material located between the outlet and the sealing surface of the movable valve member.

2. An arrangement as claimed in claim 1, characterised in that said layer of resilient material is provided by a washer (12) of resilient material.

3. An arrangement as claimed in claim 2, characterised in that there is lost motion between said washer and said movable valve member (7,10).

4. An arrangement as claimed in any of claims 1 to 3, characterised in that said movable valve member (7, 10) includes a tubular guide member (10) which extends through an aperture (16) in a wall (11) of said inlet chamber for directing liquid from said inlet chamber (1) to said container when the valve member is in its open position.

5. An arrangement as claimed in any one of the preceding claims, wherein the conical surface has a planar cross-section in the axial direction of the movable valve member.

6. An arrangement as claimed in any one of claims 1 to 4, characterised in that the conical surface has a convex cross-section in the axial direction of the movable valve member.

7. An arrangement as claimed in any one of the preceding claims, characterised in a further valve located between two inputs (2,4) for directing liquid through one or the other of said inlets.

8. A water closet system incorporating a level control valve arrangement according to any preceding claim for controlling the liquid level in a cistern.

9. A system as claimed in claim 8, characterised in a normally open valve arrangement (23, 24, 25) which is arranged to close a discharge outlet (22) of a cistern when the cistern has partially discharged.

10. A system as claimed in claim 9 or 10, characterised in that said normally open valve arrangement comprises a float member (24,26) which is arranged to close said discharge outlet (22) when the water level in the cistern falls below a predetermined level.

11. A cistern as claimed in claim 9, characterised in that said float member (23,28) is of a generally cylindrical form and is mounted for sliding motion along a generally upright overflow discharge member (21).

12. A system as claimed in claims 10 or 11, characterised in the discharge outlet (22) having a portion which is tapered inwardly in the direction of liquid flow therethrough for increasing speed of flow of liquid through the discharge outlet.

13. A system as claimed in claims 11 or 12, characterised in an aperture (23) in the wall of the discharge outlet, a gate (24) for controlling the opening aperture (23) and the liquid overflow pipe (26) connected to the aperture for directing overflow liquid and air through the aperture (23).

14. A system as claimed in claims 11, 12 or 13, characterised in that the float member (23, 28) has a variable number of float rings located at an uppermost end thereof, the member being selectable according to a desired level of liquid within the cistern.

15. A system as claimed in claim 13 or 14, characterised in that an operating member is connected to the lowermost end of the float member for closing the valve of the discharge outlet of the cistern when the level of liquid in the cistern falls to a predetermined level.
